# EUROPÄISCHE PATENTSCHRIFT

(11) **EP 1 455 066 B1**
(45) Veröffentlichungstag und Bekanntmachung des Hinweises auf die Patenterteilung: **02.06.2010**
(21) Anmeldenummer: 03005070.2
(22) Anmeldetag: 06.03.2003
(51) Int. Cl.: F02C 7/18, F01K 7/22

(54) **Verfahren zur Kühlung einer Strömungsmaschine und Strömungsmaschine dafür**
Cooling of a turbine and method therefore
Méthode et dispositif de refroidissement d'une turbomachine

(43) Veröffentlichungstag der Anmeldung: 08.09.2004
(73) Patentinhaber: SIEMENS AKTIENGESELLSCHAFT, 80333 München (DE)
(72) Erfinder: Diesler, Michael, 45527 Hattingen (DE); Grosse Düweler, Martin, 48341 Altenberge (DE); Hoffstadt, Uwe, 45468 Muelheim a.d. Ruhr (DE); Myschi, Oliver, 45473 Muelheim a.d. Ruhr (DE); Zander, Uwe, 45475 Muelheim a.d. Ruhr (DE)

(56) Entgegenhaltungen:
- EP-A- 1 152 125
- EP-A- 1 154 123
- EP-A- 1 184 541

## Beschreibung

Die Erfindung betrifft ein Verfahren zur Kühlung thermisch beanspruchter Bereiche in einer Dampfturbine, die eine Frischdampfzuleitung, einen Einströmbereich, ein Gehäuse und einen Abdampfbereich aufweist, wobei im Betrieb ein Frischdampf durch die Dampfturbine strömt und im Abdampfbereich austritt sowie eine Dampfturbine zur Durchführung des Verfahrens.

Im Strömungsmaschinenbau, insbesondere im Dampfturbinenbau, wird zur Kühlung von thermisch hoch beanspruchter Bereiche Dampf benötigt, der Temperaturen aufweist, die bei Frischdampfdruck unter der Frischdampftemperatur liegen. Der Frischdampfdruck ist der Druck eines Strömungsmediums, das in den Einströmbereich einer Strömungsmaschine gelangt. Die Frischdampftemperatur ist entsprechend die Temperatur, die ein Strömungsmedium am Eintritt in eine Strömungsmaschine aufweist.

In heutigen Strömungsmaschinen steht Kühldampf mit den vorbeschriebenen charakteristischen Größen Temperatur und Druck aus der Eigenversorgung nicht zur Verfügung.

In der Regel wird der benötigte Kühldampf durch eine separate Leitung zur Strömungsmaschine geleitet. Bei Strömungsmaschinen mit mehrstufigen Überhitzerstufen wird der Kühldampf meist vor der letzten Überhitzerstufe aus einem zugehörigen Kessel entnommen und in einer gesonderten Leitung zur Strömungsmaschine geführt. Der Nachteil bei dieser Lösung ist, dass eine gesonderte Leitung zusätzliche Kosten verursacht. Darüber hinaus entsteht eine direkte Abhängigkeit vom Kessel insofern, dass die Bemessung des Kühldampfsystems von den Kesselparametern abhängt sowie dass ein Ausfall der Kühldampfversorgung ebenfalls zu einem Ausfall Kühlung führt.

Kühlmöglichkeiten für Strömungsmaschinen sind in der EP-A-1 152 125 und EP-A- 1 184 541 beschrieben.

Aufgabe der Erfindung ist es, ein Verfahren anzugeben, bei denen die Bereitstellung von Kühldampf weniger störanfällig ist. Außerdem soll eine Dampfturbine angegeben werden, für die das vorgenannte Verfahren eingesetzt wird.

Die auf das Verfahren hin gerichtete Aufgabe wird durch die Merkmale des Anspruchs 1 gelöst. Durch dieses Verfahren ist es möglich Kühldampf bereitzustellen, ohne eine gesonderte externe Leitung für die Zufuhr von Kühldampf einzusetzen. Der Kühldampf wird quasi von der Dampfturbine selbst erzeugt.

Durch die Anordnung des Wärmetauschers im Abdampfbereich wird erreicht, dass als Kühlquelle keine externe Kühlquelle eingesetzt werden muss. Dadurch entsteht sozusagen ein autarkes System.

In einer vorteilhaften Weiterbildung des Verfahrens wird ein Absperrventil in der Frischdampfzuleitung angeordnet und der Teil des Strömungsmediums der direkt zum Abdampfbereich führt, nach dem Absperrventil abgezweigt. Dadurch wird die Möglichkeit geschaffen, bei einer auftretenden Störung durch Betätigen des Schnellschlussventils die Dampfzufuhr zur Strömungsmaschine schnell zu unterbrechen.

In einer vorteilhaften Weiterbildung des Verfahrens wird das Verfahren für Strömungsmaschinen eingesetzt, die einen Wärmetauscher aufweisen, der sich dadurch auszeichnet, dass der Teil des Strömungsmediums, der durch den Wärmetauscher strömt, um mindestens 10°C unter die Temperatur des Frischdampfes gekühlt wird. Insbesondere kann sich der Wärmetauscher dadurch auszeichnen, dass der Teil des Strömungsmediums, der durch den Wärmetauscher strömt, um mindestens 20°C unter die Temperatur des Frischdampfes gekühlt wird.

In einer vorteilhaften Weiterbildung des Verfahrens wird das Verfahren auf eine Strömungsmaschine angewendet, die einen Schubausgleichkolben aufweist, wobei der in dem Verfahren erzeugte Kühldampf zum thermisch beanspruchten Schubausgleichkolben geführt wird. Dadurch wird die Möglichkeit geschaffen, ein thermisch beanspruchtes Bauteil, wie den Schubausgleichkolben, autark ohne gesonderte Kühldampfleitung zu kühlen.

Die auf die Vorrichtung hin gerichtete Aufgabe wird durch eine Strömungsmaschine gemäß Anspruch 6 gelöst. Der Kühldampf wird quasi von der Strömungsmaschine selbst erzeugt.

Durch die Anordnung des Wärmetauschers im Abdampfbereich wird erreicht, dass als Kühlquelle keine externe Kühlquelle eingesetzt werden muss. Dadurch entsteht sozusagen ein autarkes System.

In einer vorteilhaften Weiterbildung der Vorrichtung befindet sich ein Absperrventil in der Frischdampfzuleitung, wobei die Abzweigung der Frischdampfzuleitung zum Wärmetauscher kurz nach dem Absperrventil erfolgt. Dadurch wird erreicht, dass bei einer auftauchenden Störung die Frischdampfzuleitung und somit auch die Kühlzuleitung unterbrochen werden kann.

In einer weiteren vorteilhaften Weiterbildung der Vorrichtung wird der erzeugte Kühldampf direkt zum Schubausgleichkolben der Dampfturbine geführt. Dadurch wird gezielt ein Bereich gekühlt, der in einer Strömungsmaschine thermisch beansprucht ist.

Ein Ausführungsbeispiel der Erfindung wird anhand einer Zeichnung näher erläutert.

Die Figuren der Zeichnungen zeigen im einzelnen:
- Figur 1: den Querschnitt einer Strömungsmaschine;
- Figur 2: eine Prinzipsskizze der Kühldampferzeugung.

Für gleiche und funktionsidentische Bauteile werden durchgehend dieselben Bezugszeichen verwendet.

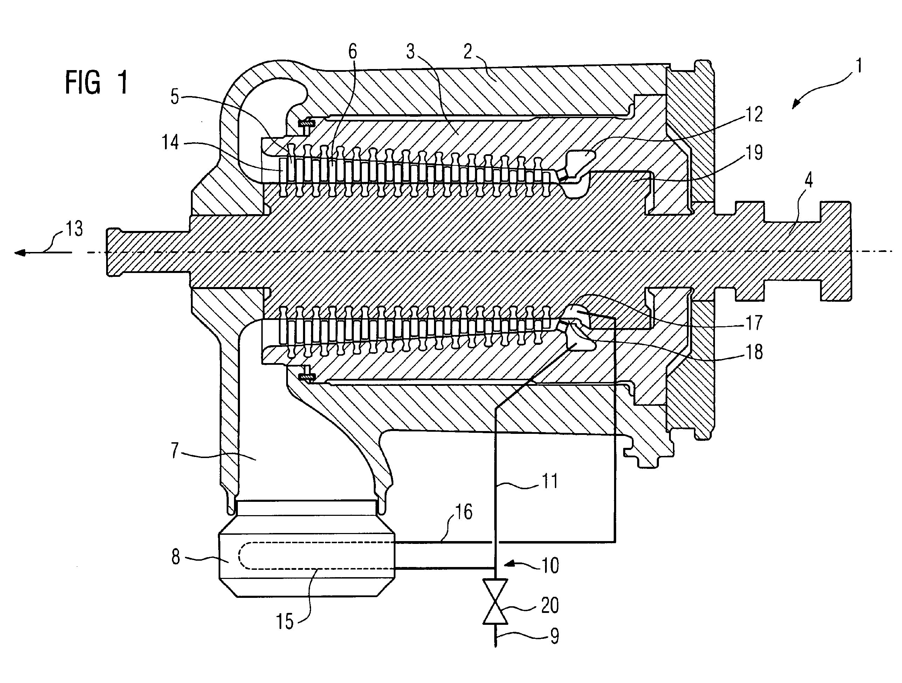

In Figur 1 ist eine Strömungsmaschine 1 dargestellt. Die Strömungsmaschine 1 weist ein Gehäuse 2 auf. Ein Innengehäuse 3 ist so angeordnet, dass eine Welle 4 innerhalb des Innengehäuses 3 drehbar ist. Das Innengehäuse 3 weist Leitschaufeln 5 auf. Die Welle 4 weist Laufschaufeln 6 auf. Im Abdampfbereich 7 ist ein Wärmetauscher 8 angeordnet.

Der Frischdampf wird von einem nicht dargestellten Kessel über die Frischdampfzuleitung 9 zur Strömungsmaschine 1 geführt. An der Abzweigung 10 wird ein Teil des Frischdampfes zum Wärmetauscher 8 geführt. Die Temperatur des Frischdampfes vor dieser Abzweigung 10 kann bei 565°C und der Druck bei 250 bar liegen. Der restliche Teil des Frischdampfes, d. h. der Teil der nicht zum Wärmetauscher geführt wird, gelangt über die Leitung 11 in die Strömungsmaschine 1. Der Frischdampf gelangt hierbei in den Frischdampfeinströmbereich 12 und von dort strömt das Strömungsmedium durch die Leit- und Laufschaufeln 5, 6 in axialer Richtung 13 entlang. Nach der letzten Schaufelreihe 14, die aus einer Reihe Leit- und Laufschaufeln 5 und 6 besteht, gelangt der abgekühlte und entspannte Frischdampf in den Abdampfbereich 7. Die Temperatur kann nun 330°C betragen. Der Druck kann bei 55bar liegen.

Der Wärmetauscher 8 wird derart gestaltet, dass das nach dem Wärmetauscher 8 austretende Strömungsmedium um mindestens 10°C, insbesondere um mindestens 20°C gegenüber dem vor dem in den Wärmetauscher eintretenden Strömungsmedium abgekühlt wird.

Der somit abgekühlte Frischdampf gelangt über die Ableitung 16 in den Einströmbereich 17 der Strömungsmaschine 1. Der Einströmbereich 17 ist über einen Leitschaufelring 18 derart vom Frischdampfeinströmbereich 12 getrennt, dass der abgekühlte Frischdampf, der aus der Ableitung 16 kommt, in den Einströmbereich 17 gelangt. Von dort gelangt der abgekühlte Frischdampf zum thermisch beanspruchten Schubausgleichkolben 19 oder zu weiteren thermisch beanspruchten Bereichen. Die thermisch beanspruchten Bereiche der Welle 4 im Einströmbereich 17 werden durch den abgekühlten Frischdampf gekühlt.

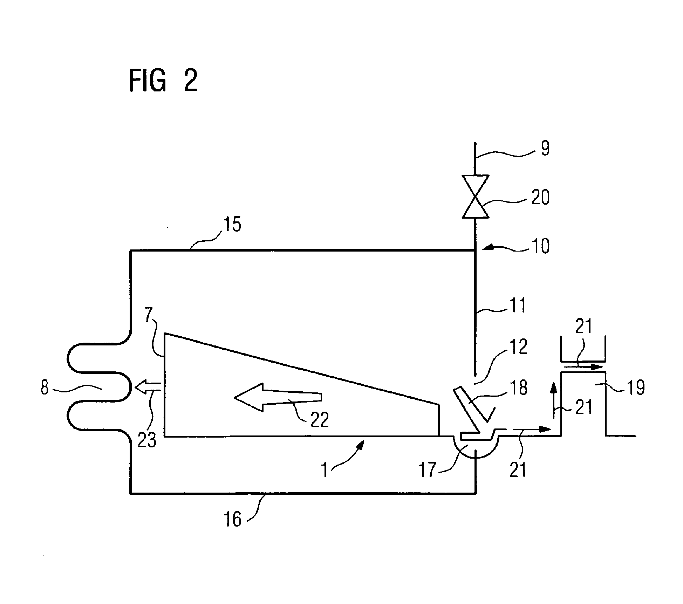

In Figur 2 ist eine Prinzipsskizze der Kühlanordnung zu sehen. Frischdampf gelangt über eine Frischdampfzuleitung 9 zur Strömungsmaschine 1. Die Frischdampfzuleitung 9 weist ein Absperrventil 20 auf. Das Absperrventil 20 ist vor einer Abzweigung 10 angebracht. Die Abzweigung 10 führt zu einer Abzweigung von Frischdampf über eine Zuleitung 15 zum Wärmetauscher 8. Der abgezweigte Frischdampf wird im Wärmetauscher 8 abgekühlt und gelangt über die Ableitung 16 in den Einströmbereich 17. Durch die Pfeile 21 wird die Strömungsrichtung des Kühldampfes 21 dargestellt. Der Kühldampf wird um den Schubausgleichkolben 19 geführt und kühlt somit diesen thermisch beanspruchten Bereich. Über einen Leitschaufelring 18 wird der Einströmbereich 17 vom Frischdampfeinströmbereich 12 getrennt.

Der Teil des Frischdampfes der über die Frischdampfzuleitung 9 und der Leitung 11 zur Strömungsmaschine 1 gelangt, strömt über in Figur 2 nicht dargestellte Leit- und Laufschaufeln in der Pfeilrichtung 22 durch die Strömungsmaschine 1 und tritt im Abdampfbereich 7 aus der Strömungsmaschine 1 heraus. Der Leitschaufelring 18 ist derart angebracht, dass der Kühldampf in die Strömungsmaschine 1 eingeleitet werden kann. Dabei muss lediglich der Druckverlust im verwendeten Wärmetauscher 8 niedriger sein als der Druckabbau über diesen Leitschaufelring 18, um eine treibende Druckdifferenz zu erhalten. Der im Abdampfstrom 23 der Strömungsmaschine 1 befindliche Wärmetauscher 8 kühlt den über die Zuleitung 15 kommenden Frischdampf herunter und gibt die überschüssige Wärme an den Abdampf ab, die gegebenenfalls in einer nicht dargestellten nachgeschalteten Zwischenüberhitzung eingespart werden kann. Dadurch treten keine zusätzlichen Verluste auf.

Der für die Kühlung benötigte Frischdampf kann hinter dem Absperrventil 20 abgenommen werden. Dadurch wird das gesamte System selbstregulierend, d. h. es werden keine zusätzlichen Absperr- oder Regeleinrichtungen benötigt. Dadurch ist dieses Verfahren zur Kühlung unabhängig von einem nicht dargestellten Kessel und sonstigen Komponenten. Mit anderen Worten, der benötigte Kühldampf wird von der Turbine selbst erzeugt und macht sie damit unabhängig von externen Komponenten. Diese Variante ist einfach und kostengünstig, da die Erzeugung des Kühldampfes mit einem in der Zuleitung 15 eingebauten Wärmetauscher 8 erfolgt.

## Patentansprüche

1. Verfahren zur Kühlung thermisch beanspruchter Bereiche in einer Dampfturbine (1), die eine Frischdampfzuleitung (9), einen Einströmbereich (17), ein Gehäuse (2) und einen Abdampfbereich (7) aufweist, wobei im Betrieb ein Frischdampf aus der Frischdampfzuleitung (9) durch die Dampfturbine strömt und im Abdampfbereich (7) austritt, wobei ein Teil des Frischdampfes aus der Frischdampfzuleitung (9) vor dem Eintritt in die Dampfturbine (1) mittels eines Wärmetauschers (8) abgekühlt wird und über den Einströmbereich (17) in die Dampfturbine (1) eintritt, wobei im Einströmbereich (17) befindliche thermisch beanspruchte Bereiche durch den so abgekühlten Frischdampf gekühlt werden,
**dadurch gekennzeichnet, dass** der Wärmetauscher (8) sich im Abdampfbereich (7) der Dampfturbine (1) befindet.

2. Verfahren nach Anspruch 1,
**dadurch gekennzeichnet, dass** der Teil des Frischdampf, der zum Wärmetauscher (8) geführt wird, nach einem in der Frischdampfzuleitung (9) befindlichen Absperrventil(20) abgeführt wird.

3. Verfahren nach einem der Ansprüche 1 oder 2,
**dadurch gekennzeichnet, dass** die Temperatur des im Wärmetauscher (8) abgekühlten Teiles des Frischdampfes um mindestens 10°C unter der Temperatur des Frischdampfes liegt.

4. Verfahren nach einem der Ansprüche 1 oder 2,
**dadurch gekennzeichnet, dass** die Temperatur des im Wärmetauscher (8) abgekühlten Teiles des Frischdampfes um mindestens 20°C unter der Temperatur des Frischdampfes liegt.

5. Verfahren nach einem der Ansprüche 1 bis 4,
**dadurch gekennzeichnet, dass** der Teil des Frischdampfes, der mittels des Wärmetauschers (8) abgekühlt wird, zu einem Schubausgleichskolben (19) geführt wird.

6. Dampfturbine (1), die eine mit einem Frischdampf durchströmbare Frischdampfzuleitung (9) aufweist, die zu einem Frischdampfeinströmbereich (12) führt, wobei die Dampfturbine (1) einen Abdampfbereich (7) aufweist, die Frischdampfzuleitung (9) eine Abzweigung (10) aufweist, mit der ein Teil des Frischdampfes über eine Leitung (15) zu einem Wärmetauscher (8) geführt wird und die Dampfturbine (1) eine Zuleitung (16) nach dem Wärmetauscher (8) in einen Einströmbereich (17) der Dampfturbine (1) aufweist,
**dadurch gekennzeichnet, dass** der Wärmetauscher (8) im Abdampfbereich (7) der Dampfturbine (1) angeordnet ist.

7. Dampfturbine (1) nach Anspruch 6,
**dadurch gekennzeichnet, dass** die Frischdampfzuleitung (9) vor der Abzweigung (10) ein Absperrventil(20) aufweist.

8. Dampfturbine (1) nach Anspruch 6 oder 7,
**dadurch gekennzeichnet, dass** die Zuleitung (16) zu einem Schubausgleichskolben (19) geführt wird.

## Claims

1. Method for cooling thermally stressed regions in a steam turbine (1) which has a live-steam feed line (9), an inflow region (17), a housing (2) and an exhaust-steam region (7), live steam from the live-steam feed line (9) flowing through the steam turbine and leaving in the exhaust-steam region (7) during operation, part of the live steam from the live-steam feed line (9) being cooled by means of a heat exchanger (8) before entry into the steam turbine (1) and entering the steam turbine (1) via the inflow region (17), thermally stressed regions that are located in the inflow region (17) being cooled by the live steam that has been cooled in this way, **characterized in that** the heat exchanger (8) is located in the exhaust-steam region (7) of the steam turbine (1).

2. Method according to Claim 1, **characterized in that** the part of the live steam that is passed to the heat exchanger (8) is removed downstream of a shut-off valve (20) located in the live-steam feed line (9).

3. Method according to either of Claims 1 and 2, **characterized in that** the temperature of the part of the live steam that is cooled in the heat exchanger (8) lies at least 10°C below the temperature of the live steam.

4. Method according to either of Claims 1 and 2, **characterized in that** the temperature of the part of the live steam that is cooled in the heat exchanger (8) lies at least 20°C below the temperature of the live steam.

5. Method according to one of Claims 1 to 4, **characterized in that** the part of the live steam that is cooled by means of the heat exchanger (8) is passed to a thrust-compensating piston (19).

6. Steam turbine (1) which has a live-steam feed line (9) through which live steam can flow and which leads to a live-steam inflow region (12), the steam turbine (1) having an exhaust-steam region (7), the live-steam feed line (9) having a branch (10) with which part of the live steam is passed via a line (15) to a heat exchanger (8), and the steam turbine (1) having a feed line (16) downstream of the heat exchanger (8) into an inflow region (17) of the steam turbine (1), **characterized in that** the heat exchanger (8) is arranged in the exhaust-steam region (7) of the steam turbine (1).

7. Steam turbine (1) according to Claim 6, **characterized in that** the live-steam feed line (9) has a shut-off valve (20) upstream of the branch (10).

8. Steam turbine (1) according to Claim 6 or 7, **characterized in that** the feed line (16) is led to a thrust-compensating piston (19).

## Revendications

1. Procédé de refroidissement de parties sollicitées thermiquement d'une turbine ( 1 ) à vapeur, qui a un conduit ( 9 ) d'apport de vapeur fraîche, une partie ( 7 ) d'entrée, un carter ( 2 ) et une partie ( 7 ) de sortie de la vapeur, dans lequel en fonctionnement une vapeur fraîche provenant du conduit ( 9 ) d'apport de vapeur fraîche passe dans la turbine à vapeur et sort dans la partie ( 7 ) de sortie de la vapeur, dans lequel une partie de la vapeur fraîche provenant du conduit ( 9 ) d'apport de vapeur fraîche est refroidie avant l'entrée dans la turbine ( 1 ) à vapeur au moyen d'un échangeur de chaleur ( 8 ) et entre par la partie ( 7 ) d'entrée dans la turbine ( 1 ) à vapeur, dans lequel des parties sollicitées thermiquement et se trouvant dans la partie ( 17 ) d'entrée sont refroidies par la vapeur fraîche ainsi refroidie,
**caractérisé en ce que** l'échangeur de chaleur ( 8 ) se trouve dans la partie ( 7 ) de sortie de la vapeur de la turbine ( 1 ) à vapeur.

2. Procédé suivant la revendication 1,
**caractérisé en ce que** l'on évacue la vapeur fraîche qui passe dans l'échangeur de chaleur ( 8 ), après une vanne ( 20 ) d'arrêt se trouvant dans le conduit ( 9 ) d'apport de vapeur fraîche.

3. Procédé suivant l'une des revendications 1 ou 2,
**caractérisé en ce que** la température de la partie refroidie dans l'échangeur de chaleur ( 8 ) de la vapeur fraîche est d'au moins 10°C inférieure à la température de la vapeur fraîche.

4. Procédé suivant l'une des revendications 1 ou 2,
**caractérisé en ce que** la température de la partie, refroidie dans l'échangeur de chaleur ( 8 ), de la vapeur fraîche est d'au moins 20°C inférieure à la température de la vapeur fraîche.

5. Procédé suivant l'une des revendications 1 à 4,
**caractérisé en ce que** la partie de la vapeur fraîche, qui est refroidie à l'aide de l'échangeur ( 8 ), est envoyée à un piston ( 19 ) de compensation de la poussée.

6. Turbine ( 1 ) à vapeur qui a un conduit ( 9 ) d'apport de vapeur fraîche dans lequel peut passer de la vapeur fraîche et qui mène à une partie ( 12 ) d'entrée de la vapeur fraîche, la turbine ( 1 ) à vapeur ayant une partie ( 7 ) de sortie de la vapeur, le conduit ( 9 ) d'apport de vapeur fraîche ayant une dérivation ( 10 ) par laquelle une partie de la vapeur fraîche est envoyée par un conduit ( 15 ) à un échangeur de chaleur ( 8 ) et la turbine ( 1 ) à vapeur a un conduit ( 16 ) d'apport après l'échangeur ( 8 ) de chaleur dans une partie ( 17 ) d'entrée de la turbine ( 1 ) à vapeur,
**caractérisée en ce que** l'échangeur de chaleur ( 8 ) est disposé dans la partie ( 7 ) de sortie de la vapeur de la turbine ( 1 ) à vapeur.

7. Turbine ( 1 ) à vapeur suivant la revendication 6,
**caractérisée en ce que** le conduit ( 9 ) d'apport de vapeur fraîche a une vanne ( 20 ) d'arrêt avant la dérivation ( 10 ).

8. Turbine ( 1 ) à vapeur suivant la revendication 6 ou 7,
**caractérisé en ce que** le conduit ( 16 ) d'apport va à un piston ( 19 ) de compensation de la poussée.
